# EUROPEAN PATENT APPLICATION

(11) **EP 4 641 029 A1**
(43) Date of publication of application: **29.10.2025**
(21) Application number: 25170339.3
(22) Date of filing: 14.04.2025
(51) Int. Cl.: F15B 11/16, E02F 9/22, F15B 11/17

(54) **DIRECTIONAL CONTROL VALVE DEVICE**

(30) Priority: 24.04.2024 JP 2024070619
(71) Applicant: NABTESCO CORPORATION, Chiyoda-ku Tokyo 102-0093 (JP)
(72) Inventor: Mikami, Kosuke, Tokyo, 102-0093 (JP); Masatani, Ryoma, Tokyo, 102-0093 (JP)
(74) Representative: Grünecker Patent- und Rechtsanwälte PartG mbB

(57) **Abstract**

A directional control valve device (1) has: a plurality of spool valves (3A-3D); a first signal passage (11) connected to the plurality of spool valves; and a second signal passage (12) connected to the first signal passage at a connection site (16) upstream from one or more of the plurality of spool valves for which shifting is to be detected.

## Description

### TECHNICAL FIELD

The present disclosure relates to a directional control valve device.

### BACKGROUND

Japanese Patent Application Publication No. 2001-221357 ("the '357 Publication") discloses a directional control valve device having a plurality of valve blocks stacked on each other. Each valve block includes a valve body having a spool hole, and a spool provided in the spool hole in a movable manner. The directional control valve device can switch between supplying and blocking a hydraulic oil by controlling how the spools move. The directional control valve device has a signal passage to detect the shifting of the spools. The directional control valve device disclosed in the '357 Publication has a first signal passage where pressure occurs when any of the spools is shifted. In addition to the first signal passage, a second signal passage may be provided where pressure occurs when a specific one of the spools is shifted. Providing the second signal passage requires two signal passages on the spools, which may result in an increase in size of the directional control valve device.

### SUMMARY

An aspect provides a directional control valve device. The directional control valve device includes: a plurality of spool valves; a first signal passage connected to the plurality of spool valves; and a second signal passage connected to the first signal passage at a connection site upstream from one or more of the plurality of spool valves for which shifting is to be detected.

According to one embodiment, the second signal passage may diverge from the first signal passage at a diverging site upstream from the connection site. The directional control valve device may further include: a first throttle provided in the first signal passage between the diverging site and a first spool valve from among the plurality of spool valves that is located the most upstream; and a second throttle provided in the second signal passage between the diverging site and the connection site. According to one embodiment, the diverging site may be located upstream from the first throttle in the first signal passage.

According to one embodiment, the directional control valve device may further include: a switch valve provided in the first signal passage between the first throttle and the first spool valve, the switch valve being configured to be switched upon occurrence of a predetermined pressure; and a pressure sensor provided in the second signal passage between the second throttle and the connection site, the pressure sensor being configured to output a signal upon occurrence of a predetermined pressure.

According to one embodiment, the plurality of spool valves may be respectively provided in a plurality of valve blocks, and the connection site may be located at an abutting surface between a pair of valve blocks among the plurality of valve blocks. According to one embodiment, the first and second signal passages may be located in a same plane that is orthogonal to an axial direction of the plurality of spool valves.

### BRIEF DESCRIPTION OF THE DRAWINGS

Fig. 1 is a hydraulic circuit diagram of a directional control valve device relating to one embodiment.
Fig. 2 is a cross-sectional view of the directional control valve device of Fig. 1.
Fig. 3 is a longitudinal-sectional view of a directional control valve device relating to a modification example.

### DESCRIPTION OF THE PREFERRED EMBODIMENTS

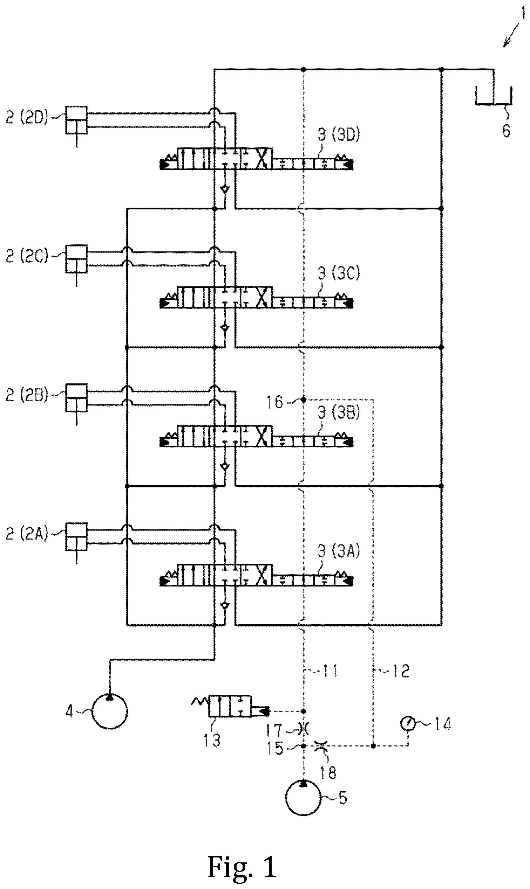

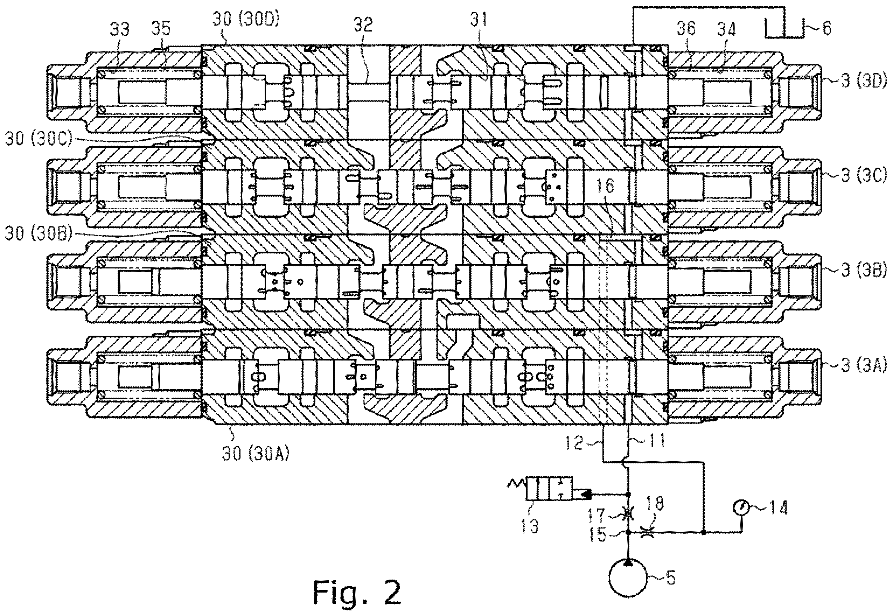

With reference to Figs. 1 and 2, the following describes a directional control valve device relating to an embodiment. A directional control valve device is a valve that controls the flow of a hydraulic fluid supplied from a pump to a hydraulic actuator and discharged from the hydraulic actuator to a tank. For example, the hydraulic actuator is a hydraulic cylinder for moving an arm or boom of a construction machine. Alternatively, the hydraulic actuator may be a hydraulic motor or the like.

### (Directional Control Valve Device 1)

As shown in Fig. 1, a directional control valve device 1 includes four hydraulic actuators 2 and four spool valves 3. Each of the hydraulic actuators 2 is connected to a corresponding one of the spool valves 3.

Each spool valve 3 receives compressed oil supplied from a first pump 4 and controls the supply of the compressed oil from the first pump 4 to the corresponding hydraulic actuator 2. The spool valve 3 receives compressed oil supplied from a second pump 5, and the supplying of the compressed oil results in detecting that the spool valve 3 is shifted. The spool valve 3 controls the supply of the compressed oil to the hydraulic actuator 2 as the position of the spool is shifted by control pressure output from an electromagnetic proportional valve (not shown). The compressed oil supplied to the spool valve 3 and hydraulic actuator 2 is discharged to a tank 6.

A first spool valve 3A controls supply of a compressed oil to a first hydraulic actuator 2A. A second spool valve 3B controls supply of a compressed oil to a second hydraulic actuator 2B. A third spool valve 3C controls supply of a compressed oil to a third hydraulic actuator 2C. A fourth spool valve 3D controls supply of a compressed oil to a fourth hydraulic actuator 2D.

The directional control valve device 1 has a first signal passage 11 and a second signal passage 12. The first and second signal passages 11 and 12 receive a compressed oil supplied from the second pump 5. The compressed oil supplied to the first and second signal passages 11 and 12 is discharged to the tank 6. The first signal passage 11 is connected in series to the four spool valves 3, and pressure occurs in the first signal passage 11 when at least one of the four spool valves 3 is shifted. In other words, when any of the four spool valves 3 is shifted, the first signal passage 11 is blocked and pressure occurs.

In the second signal passage 12, pressure occurs when at least one of the third and fourth spool valves 3C and 3D is shifted. The third and fourth spool valves 3C and 3D are those of the spool valves 3 for which shifting is to be detected, that is to say, shifting detection target spool valves 3. The second signal passage 12 diverges from the first signal passage 11 at a site upstream from the first spool valve 3A. The second signal passage 12 merges into the first signal passage 11 at a site upstream from the third spool valve 3C. The second signal passage 12 merges into the first signal passage 11 at a site downstream from the second spool valve 3B. In other words, the first and second signal passages 12 share the passage extending downstream from the merging site (connection site) 16. The part of the second signal passage 12 that extends upstream from the merging site is not connected to the first and second spool valves 3A and 3B. This means the second signal passage 12 is not blocked by the first and second spool valves 3A and 3B.

The directional control valve device 1 has a first throttle 17 and a second throttle 18. The first throttle 17 is provided in the first signal passage 11 between a diverging site 15 and the first spool valve 3A (that is to say, the most upstream spool valve of the spool valves). The second throttle 18 is provided in the second signal passage 12 between the diverging site 15 and the merging site 16.

The directional control valve device 1 has a switch valve 13 and a pressure sensor 14. The switch valve 13 is provided in the first signal passage 11 between the first throttle 17 and the first spool valve 3A, and can be switched upon occurrence of a predetermined pressure. The pressure sensor 14 is provided in the second signal passage 12 between the second throttle 18 and the merging site 16, and can output a detection signal upon detection of occurrence of a predetermined pressure.

### (Valve Block 30)

As shown in Fig. 2, each spool valve 3 is provided in a valve block 30 shaped like a rectangular parallelepiped. The spool valve 3 has a spool hole 31 and a spool 32. The spool hole 31 is formed in the valve block 30. The spool 32 can slide in the spool hole 31. A first hydraulic chamber 33 is provided on the left end of the valve block 30. In the first hydraulic chamber 33, a first bias spring 35 is provided to bias the spool 32. A second hydraulic chamber 34 is provided on the right end of the valve block 30. In the second hydraulic chamber 34, a second bias spring 36 is provided to bias the spool 32. The spool 32 is driven to the right side upon the supply of the compressed oil into the first hydraulic chamber 33 and to the left side upon supply of the compressed oil into the second hydraulic chamber 34.

The first spool valve 3A is provided in a first valve block 30A. The second spool valve 3B is provided in a second valve block 30B. The third spool valve 3C is provided in a third valve block 30C. The fourth spool valve 3D is provided in a fourth valve block 30D. The first, second, third and fourth valve blocks 30A, 30B, 30C and 30D are stacked.

The first and second signal passages 11 and 12 are differently positioned in the axial direction of the spool valves 3. The merging site 16 is located on the abutting surface between the second and third valve blocks 30B and 30C. The path at the merging site 16 is a groove formed on the outer surface of at least one of the second valve block 30B or the third valve block 30C.

### (How Embodiment Works)

The following now describes how the above-described directional control valve device 1 works to perform detection by means of the first and second signal passages 11 and 12 with reference to Fig. 1.

### (When First Spool Valve 3A is Shifted)

If the first spool valve 3A is shifted, the first signal passage 11 is blocked. Therefore, a predetermined pressure occurs in the first signal passage 11 upstream from the first spool valve 3A. This causes the switch valve 13 to be switched. The second signal passage 12 merges with the first signal passage 11 at the merging site 16 to be connected to the third and fourth spool valves 3C and 3D, which are located downstream from the first spool valve 3A. Therefore, shifting of the first spool valve 3A does not result in a predetermined pressure occurring in the second signal passage 12.

### (When Third Spool Valve 3C is Shifted)

If the third spool valve 3C is shifted, the first signal passage 11 is blocked. Therefore, a predetermined pressure occurs in the first signal passage 11 upstream from the third spool valve 3C. This causes the switch valve 13 to be switched. The second signal passage 12 merges with the first signal passage 11 at the merging site 16 to be connected to the third and fourth spool valves 3C and 3D. If the third spool valve 3C is shifted, the second signal passage 12 is blocked. Therefore, a predetermined pressure in the second signal passage 12 occurs upstream from the third spool valve 3C.

### (When First and Third spool valves 3A and 3C are Shifted)

As the first spool valve 3A is shifted, the first signal passage 11 is blocked. Therefore, a predetermined pressure occurs in the first signal passage 11 upstream from the first spool valve 3A. This causes the switch valve 13 to be switched. As the third spool valve 3C is shifted, the second signal passage 12 is blocked. Therefore, a predetermined pressure occurs in the second signal passage 12 upstream from the third spool valve 3C. The pressure sensor 14 then outputs a detection signal.

In the above-described manner, the first signal passage 11 can detect whether any of the first, second, third and fourth spool valves 3A, 3B, 3C, and 3D is shifted. The second signal passage 12 can detect whether either one of the third and fourth spool valves 3C and 3D is shifted.

### (Advantageous Effects Of Embodiment)

Advantageous effects of the above embodiment will be now described. (1) The first and second signal passages 11 and 12 share the passage extending downstream from the merging site 16. Therefore, it is only the first signal passage 11 that should extend downstream from the merging site 16 where the second signal passage 11 merges with the first signal passage 11. The portion of the second signal passage 12 that extends upstream from the merging site 16 is connected to none of the spool valves 3. This eliminates the need of providing the second signal passage 12 in the area where the spool valves 3 are provided. The directional control valve device 1 may need to be enlarged to accommodate the second signal passage 12, but the present embodiment can avoid such an increase in size.

(2) The first throttle 17 is provided in the first signal passage 11 downstream from the diverging site 15, and the second throttle 18 is provided in the second signal passage 12 downstream from the diverging site 15. Therefore, the pressure occurring in the first signal passage 11 does not interfere with the pressure occurring in the second signal passage 12, so that they can be separately extracted.

(3) Upon occurrence of a predetermined pressure in the first signal passage 11, the switch valve 13 is switched. Upon occurrence of a predetermined pressure in the second signal passage 12, the pressure sensor 14 detects the pressure and outputs a signal. Thus, switching is performed by the first signal passage 11 upon shifting in any of the spool valves 3, and a signal is output by the second signal passage 12 upon shifting in a specific one of the spool valves 3 for which shifting is to be detected.

(4) The merging site 16 of the first and second signal passages 11 and 12 is provided on the abutting surface between the second and third valve blocks 30B and 30C. Therefore, the merging site 16 can be easily obtained.

### (Other Embodiments)

The foregoing embodiment can be modified as described below. The above embodiment and the following modification examples can be implemented in combination to the extent where they are technically consistent to each other.

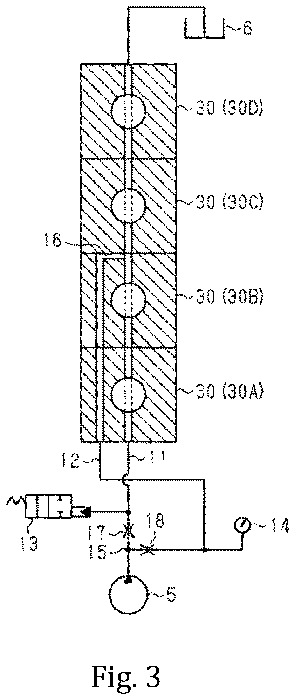

According to the above embodiment, the first and second signal passages 11 and 12 are provided on planes that are differently positioned in the axial direction of the spool valves 3. As shown in Fig. 3, however, the first and second signal passages 11 and 12 may be provided on the same plane that is orthogonal to the axial direction of the spool valves 3. In this way, the directional control valve device can have a reduced size in the axial direction of the spool valves 3.

(4) According to the foregoing embodiment, the merging site 16 of the first and second signal passages 11 and 12 is provided on the abutting surface between the valve blocks 30. The merging site 16 of the first and second signal passages 11 and 12, however, may be provided inside any of the valve blocks 30.

According to the foregoing embodiment, the switch valve 13 is switched upon occurrence of a predetermined pressure in the first signal passage 11, and the pressure sensor 14 detects a predetermined pressure in the second signal passage 12 and outputs a signal upon occurrence of a predetermined pressure in the second signal passage 12. Alternatively, upon occurrence of a predetermined pressure in the first signal passage 11, the pressure sensor may detect the pressure and outputs a signal. In addition, the switch valve may be switched upon occurrence of a predetermined pressure in the second signal passage 12. The directional control valve may be configured such that the switch valve 13 may be switched upon occurrence of a predetermined pressure in the first signal passage 11 and switched upon occurrence of a predetermined pressure in the second signal passage 12. The directional control valve device may be configured such that the pressure sensor may detect a predetermined pressure in the first signal passage 11 and output a signal upon occurrence of a predetermined pressure in the first signal passage 11, and the pressure sensor 14 may detect a predetermined pressure in the second signal passage 12 and output a signal upon occurrence of a predetermined pressure in the second signal passage 12.

In the foregoing embodiment, the first and second signal passages 11 and 12 receive compressed oil supplied from the second pump 5. However, different pumps may be provided to separately supply compressed oil to the first and second signal passages 11 and 12.

In the foregoing embodiment, the second signal passage 12 is configured to detect whether the third and fourth spool valves 3C and 3D are shifted. However, the merging site 16 may be provided upstream from any of the spool valves 3 for which shifting is to be detected. If it is desired to detect shifting of only the fourth spool valve 3D, the merging site 16 is provided upstream from the fourth spool valve 3D and downstream from the third spool valve 3C. If it is desired to detect shifting of the second, third and fourth spool valves 3B, 3C and 3D, the merging site 16 is provided upstream from the second spool valve 3B and downstream from the first spool valve 3A.

According to the foregoing embodiment, four spool valves 3 are provided in the directional control valve device 1. The number of spool valves 3, however, is not limited to four. The directional control valve device may include two, three and five or more spool valves 3. In this case, the spool valve 3 for which shifting is to be detected is located downstream from the merging site.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. A directional control valve device (1) comprising:
a plurality of spool valves (3A-3D);
a first signal passage (11) connected to the plurality of spool valves; and
a second signal passage (12) connected to the first signal passage at a connection site (16) upstream from one or more of the plurality of spool valves for which shifting is to be detected.

2. The directional control valve device (1) of claim 1,
wherein the second signal passage (12) diverges from the first signal passage (11) at a diverging site (15) upstream from the connection site (16), and
wherein the directional control valve device further comprises:
a first throttle (17) provided in the first signal passage between the diverging site and a first spool valve (3A) from among the plurality of spool valves that is located the most upstream; and
a second throttle (18) provided in the second signal passage between the diverging site and the connection site.

3. The directional control valve device (1) of claim 2, wherein the diverging site (15) is located upstream from the first throttle (17) in the first signal passage (11).

4. The directional control valve device (1) of claim 2, further comprising:
a switch valve (13) provided in the first signal passage (11) between the first throttle (17) and the first spool valve (3A), the switch valve being configured to be switched upon occurrence of a predetermined pressure; and
a pressure sensor (14) provided in the second signal passage (12) between the second throttle (18) and the connection site (16), the pressure sensor being configured to output a signal upon occurrence of a predetermined pressure.

5. The directional control valve device (1) of any one of claims 1-4,
wherein the plurality of spool valves (3A-3D) are respectively provided in a plurality of valve blocks (30A-30D), and
wherein the connection site (16) is located at an abutting surface between a pair of valve blocks among the plurality of valve blocks.

6. The directional control valve device (1) of claim 1, wherein the first and second signal passages (11, 12) are located in a same plane that is orthogonal to an axial direction of the plurality of spool valves (3A-3D).
